# EUROPEAN PATENT SPECIFICATION

(11) **EP 2 716 789 B1**
(45) Date of publication and mention of the grant of the patent: **25.10.2017**
(21) Application number: 12793146.7
(22) Date of filing: 29.05.2012
(51) Int. Cl.: F16D 69/04, F16D 65/092, C23C 8/26, C23C 8/32

(54) **BACKING PLATE FOR DISK BRAKE PAD, AND DISK BRAKE PAD UTILIZING BACKING PLATE**
RÜCKSEITENPLATTE FÜR EINEN SCHEIBENBREMSBELAG UND SCHEIBENBREMSBELAG MIT DER RÜCKSEITENPLATTE
PLAQUE SUPPORT POUR PLAQUETTE DE FREIN À DISQUE ET PLAQUETTE DE FREIN À DISQUE UTILISANT LA PLAQUE SUPPORT

(30) Priority: 03.06.2011 JP 2011125048
(43) Date of publication of application: 09.04.2014
(73) Proprietor: Nisshinbo Brake Inc., Chuo-ku Tokyo 103-8650 (JP)
(72) Inventor: TAKAYAMA, Takeshi, Oura-gun Gunma 370-0614 (JP); TAMAI, Yoshihiro, Oura-gun Gunma 370-0614 (JP)
(74) Representative: Isarpatent
(86) International application number: PCT/JP2012/003503
(87) International publication number: WO 2012/164911

(56) References cited:
- JP-A- 5 118 362
- JP-A- 7 109 362
- JP-A- S5 124 533
- JP-A- 11 286 787
- JP-A- 51 024 533
- US-A- 5 013 371

## Description

### [TECHNICAL FIELD]

The present invention relates to a steel back plate for such as an automotive disc brake pad and a disc brake pad in combination of the back plate and a friction material affixed thereon.

### [BACKGROUND ART]

A disc brake pad for automotive disc brakes is such that a friction material made from a fiber base material, a binder, and a friction modifier is affixed on a back plate which is a steel base member such as a hot-rolled steel plate for automobile structural uses by an adhesive or the binder involved in the friction material.

A disc brake has disc brake pads catching a disc rotor rotating with wheels therebetween and generates a braking force by pressing the disc brake pads against the disc rotor to cause a frictional force.

At this time, between the friction material and the back plate of the disc brake pad, a large shearing force is applied so that an adhesive strength between the friction material and the back plate is necessary to resist the shearing force.

In order to improve the adhesive strength between the friction material and the back plate, it is known to form a porous layer with a slightly irregular surface on the back plate surface.

Forming the porous layer with the slight irregularity on the back plate surface allows materials such as the adhesive and the binder involved in the friction material to fit into the cavity of the irregular surface, generating an anchor effect to improve the adhesive strength between the friction material and the back plate.

A nitriding method, or a soft nitriding method, has been used for the pretreatment of the back plate surface prior to the affixation of the friction material on the back plate.

The nitriding method, or the soft nitriding method, normally is exercised so as to improve the abrasion resistance, the fatigue resistance, the corrosion resistance, and the heat resistance and generally improves the smoothness of the material surface.

However, the nitriding method or the soft nitriding method in this field of art has been used to form a compound layer having the porous layer with the slightly irregular surface on the back plate surface, and the objects and advantages thereof are unique when compared to the use of the methods in other general fields of art.

The Japanese Patent Publication No. S53-47218 (Patent Document 1) discloses the disc brake pad with high adhesive strength between the friction material and the back plate by forming 5 *µ* m or more of the compound layer mainly made from Fe-C-N with the surface having slight protuberances such as bumps or meshes having 5-50 *µ* m surface roughness.

The compound layer having the slight protuberances such as the bumps or the meshes on the back plate may be formed by a gas nitiriding method or a gas soft nitriding method using ammonia gas, a salt bath nitriding method or a salt bath soft nitriding method using cyanide.

The Japanese Provisional Patent Publication No. 2007-64431 (Patent Document 2) discloses the manufacturing method for the disc brake pad to be soft nitriding treatment after forming the rough surface on the back plate surface by shot blasting.

However, the salt bath nitriding method and the salt bath soft nitriding method using cyanide, which is not preferable from an environmental view, and the gas nitriding method and the gas soft nitriding method do not form a sufficiently thick porous layer, which may not fulfill the required performance with respect to the adhesive strength due to the recent trend for automotive cars to provide higher and higher horsepower.

Also, the shot blast treatment is performed so as to form the rough surface and to remove the oxide layer interrupting the formation of the compound layer by the nitriding treatment or soft nitriding treatment, which at the same time causes a problem of forming burrs at the edges of the back plate.

These burrs need to be removed because they adversely affect the brake vibration characteristics, and thus, an extra burr removal step needs to be added, which is ineffective and inefficient.

On the other hand, as the nitriding method for the metal material, as in the Japanese Provisional Patent Publication No. H3-44457 (Patent Document 3), after activating the metal surface by substituting the oxide film existing on the metal surface to the fluorinated film by the fluorine based gas, the compound layer is formed on the metal surface by ammonia gas.

The nitriding method published in Patent Document 3 enables oxide film removal that exists on the metal surface without utilizing methods such as the shot blasting treatment, to deform the metal surface, and therefore has been widely used in the technical field where a minute and smooth compound layer surface is necessary.

However, no technical evaluation has been performed for the nitriding method disclosed in Patent Document 3 because the method has not been paid much attention in the technical field that requires the compound layer having the porous layer with slightly irregular surface on the back plate surface for achieving the shearing strength between friction material and the back plate.

### [PATENT LITERATURE]

[Patent Document 1] Japanese Patent Publication No. S53-47218
[Patent Document 2] Japanese Provisional Patent Publication No. 2007-64431
[Patent Document 3] Japanese Provisional Patent Publication No. H3-44457
[Patent Document 4] US Patent No. 5,013,371 A. This discloses a method of nitriding steel which comprises treating the steel with NF3 gas at a temperature of 150 DEG-350 DEG C. to form a fluorinated layer on the surface of the steel, and then heating the fluorinated steel at 480 DEG-700 DEG C. in a nitriding atmosphere to form a nitrided layer on the steel.

### [SUMMARY]

This invention was made in view of the above-circumstances, which relate to the steel back plate utilized for the brake pad of an automotive car or the like, and to the disc brake pad using the back plate and is to provide the back plate to improve the adhesive strength between the friction material and the back plate and the disc brake pad where the friction material is affixed on the back plate with sufficient adhesive strength.

In order to improve the adhesive strength between the friction material and the back plate, the back plate needs to have the compound layer with a sufficiently thick porous layer.

The inventors of this invention described above focused and studied the nitriding method for forming the compound layer on the metal surface by ammonia gas after activating the metal surface by substituting the oxide film existing on the metal surface to the fluorinated film by the fluorine based gas.

For the hot-rolled steel plate for automobile structural uses; i.e., SAPH400 or SAPH440 and the hot-rolled high strength steel plate with improved formability for automobile structural uses; i.e., SPFH590 both used for the back plate, the activation treatment by the fluorine based gas is generally performed at the treatment temperature of 150-350 degree Celsius for the smooth surface treatment.

However, if the treatment temperature is set higher than normal, not only the oxide film on the back plate but also the iron base material under the oxide film may be fluorinated, and if the gas nitriding treatment or gas soft nitriding treatment is performed under that condition, to be surprised, the back plate, having the compound layer with the sufficiently thick porous layer which cannot be obtained through the gas nitriding method and the gas soft nitriding method conventionally used in this field, can be obtained.

The inventors found that the above-described disc brake pad having the friction material affixed on the back plate significantly improves the adhesive strength and achieved this invention.

Also, the inventors found that the cooling step performed after the gas nitriding treatment or the gas soft nitriding treatment of the back plate can be conducted continuously after the gas nitriding step or the gas soft nitriding step under non-oxidized gas atmosphere, so that a reformation of the oxide film that can be a cause of preventing the adhesion properties of the adhesive can be prevented and the adhesive strength can be improved.

This invention relates to the back plate made of a hot-rolled steel plate for automobile structural uses or the like utilized for the disc brake pad of automotive cars and to the disc brake pad using the back plate, particularly relates to the back plate to improve the adhesive strength between the friction material and the back plate and to the disc brake pad where the friction material is affixed on the back plate with sufficient adhesive strength and where the technology described below is the base for this invention.

This invention provides a steel back plate for a disc brake pad having the features of Claim 1.

This invention also provides the disc brake pad adhering the friction material on the back plate.

This invention also provides the back plate with the surface treatment that improves the adhesive strength between the friction material and the back plate and the disc brake pad with sufficient adhesive strength.

### [BRIEF DESCRIPTION OF DRAWINGS]

FIG. 1 is a perspective view showing one example of the disc brake pad of this invention;

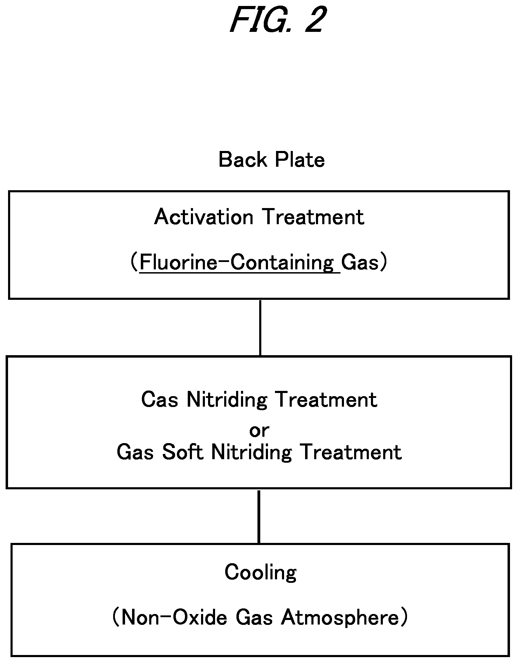

FIG. 2 is a flow chart showing the surface treatment steps of the back plate of this invention;

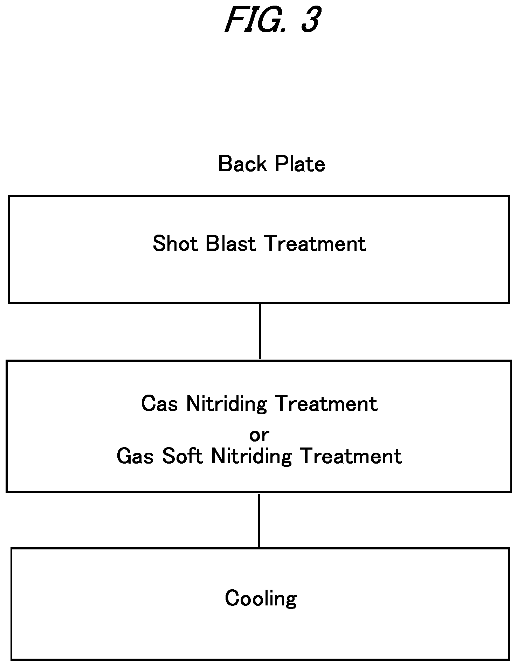

FIG. 3 is a flow chart showing the surface treatment steps of the back plate of the conventional art;

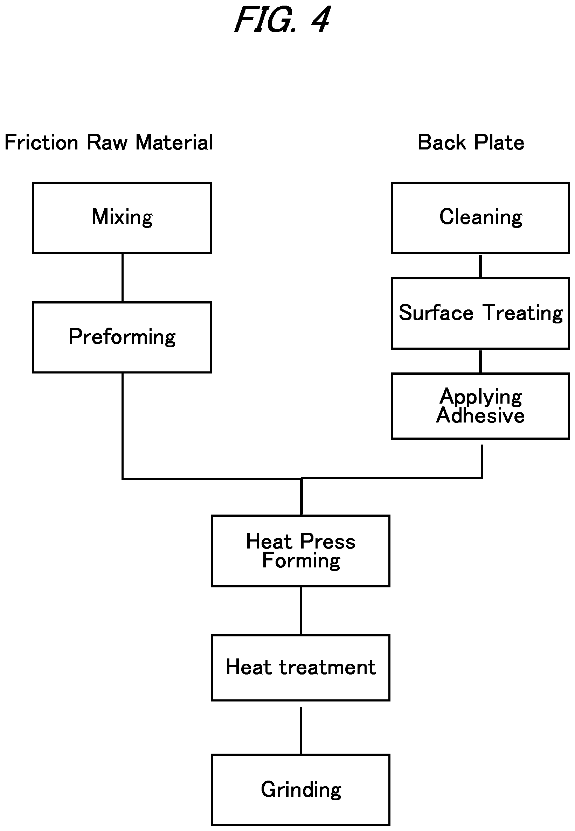

FIG. 4 is a flow chart showing one example of manufacturing process of the disc brake pad of this invention;
FIG. 5 is a 3000 magnification observing photomicrograph of a cross section of the back plate in an Embodiment 4;
FIG. 6 is a 1000 magnification observing photomicrograph of a back plate surface in the Embodiment 4;
FIG. 7 is 10000 magnification observing photomicrograph of the back plate surface in the Embodiment 4;
FIG. 8 is 3000 magnification observing of a cross section of the back plate in a Comparative Example 3;
FIG. 9 is a 1000 magnification observing photomicrograph of the back plate surface in the Comparative Example 3;
FIG. 10 is 10000 magnification observing photomicrograph of the back plate surface in the Comparative Example 3;

### [DESCRIPTION OF EMBODIMENTS]

### <1> Disc Brake Pad

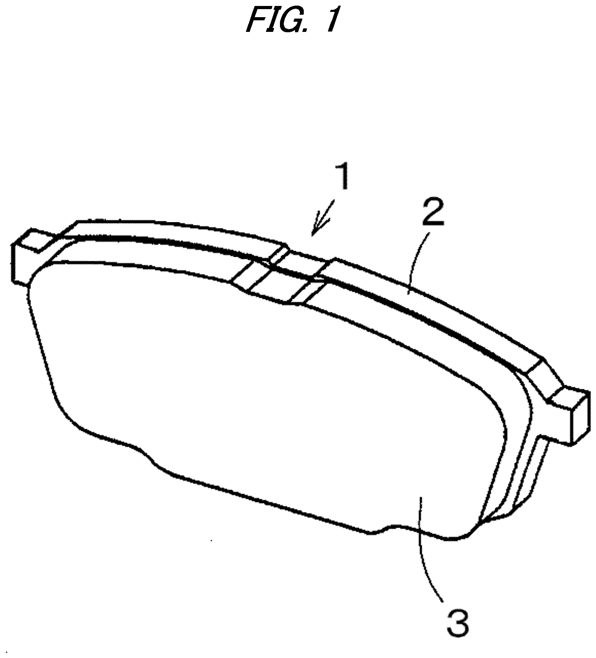

As shown in Figure 1, a disc brake pad is made by affixing a friction material to a back plate, with an adhesive or the like.

### <1-1> Back Plate

The back plate is formed by performing sheet-metal press working on the hot rolled steel plate for automobile structural uses; i.e., SAPH440 and the hot-rolled high strength steel plate with improved formability for automobile structural uses; i.e., SPFH590.

The compound layer with a depth of 5 *µ* m to 20 *µ* m is formed by a gas nitriding method or a gas soft nitriding method on a back plate surface on which a friction material is adhered, and the compound layer has the porous layer with a thickness of 40% or more of the depth of the compound layer at a front surface side of the compound layer.

The adhesive strength between the friction material and the back plate improves by using the back plate with the compound layer where the depth of the compound layer is between 5 *µ* m and 20 *µ* m and the porous layer of the compound layer where the thickness of the porous layer is 40% or more of the depth of compound layer. In order to improve the adhesive strength, it is preferable to use the back plate where the thickness of the porous layer is 50% or more but 90% or less than the depth of the compound layer, more preferably the thickness of the porous layer is 60% or more but 80% or less than the depth of the compound layer.

Also, if the oxide layer formed on the surface layer of the back plate surface, on which the friction material is adhered, is excessively thick, the adhesive strength decreases, and therefore the thickness of the oxide layer formed on the surface layer affixing the fiction material is preferably 1 *µ* m or less.

This type of back plate can be obtained by performing the surface treatment explained below.

### <1-1> Back Plate Surface Treatment

### <1-1-1> Activation Treatment

In the activation treatment steps, the back plate is placed under an atmosphere including fluorine based gas, and the oxide film formed on the back plate surface and the steel base material of the back plate under the oxide film may be fluorinated to form the fluorinated film.

The fluorine based gas to be used in this activation treatment may be a fluorinated gas (compound gas or gas including the fluorine based gas) of a halogen material with higher compatibility than oxygen relative to Fe as a matrix constituent forming the oxide film.
The fluorine based gas may be the gas of the fluorine compound, for example, NF₃, CF₄, and SF₆ as a main component gas or the gas of F₂ as a main component gas.

Normally, a dilution gas diluted the main component gas with nitrogen is used as the fluorine based gas.

NF₃ is the most practical among the main component gas because responsively and handling and the like is more efficient than the others.

The back plate under the above-described fluorine based gas atmosphere, for example, is held in the fluorine based gas atmosphere including NF₃.
At that time, the treatment temperature is set between 350 and 450 degree Celsius, more preferably between 400 and 450 degree Celsius, and the fluorinated film layer is obtained by forming the porous layer having sufficiently irregular surface after nitriding treatment or soft nitriding treatment.

Also, the activation treatment time, according to the material of the back plate to be activated, is set so that the base material of the back plate on the oxide film surface and under the oxide film can be fluorinated. The treatment time may be usually set between 10 and 180 minutes.

Furthermore, the concentration of the fluorine compounds or the fluorine under the fluorine based gas atmosphere is preferably between 1000 and 100000 ppm.

### <1-1-2> Gas Nitriding Treatment or Gas Soft Nitriding Treatment

The gas nitriding treatment performed continuously after the above-described activation treatment step can be conducted at the treatment temperature of 300-600 degree Celsius, preferably 400-600 degree Celsius for the treatment time between 30 and 60 minutes under the atmosphere including ammonia as the nitriding gas.
For gas soft nitriding treatment, mixed gas of the ammonia gas as the nitriding gas and carburizing gas may be used.

### <1-1-3> Cooling Steps

The cooling steps continuously performed after the above-described gas nitriding treatment steps can be conducted under a non-oxidized gas atmosphere.

Ammonia gas, nitrogen gas or the like may be used as non-oxidized gases.

If the cooling steps are performed in the chamber for the gas nitriding treatment steps and the gas soft nitriding treatment steps, an additional step of transferring to another chamber can be eliminated.

### <1-2> Friction Material

The friction material includes a fiber base material such as metallic fibers, organic fibers, and inorganic fibers, a binder such as thermosetting resin, and the friction modifiers such as organic fillers, inorganic fillers, and lubricants.

The fiber base material may be metal fibers such as steel fibers and copper fibers, organic fibers such as aramid fibers and acrylic fibers, and inorganic fibers such as potassium titanate fibers, carbon fibers, ceramic fibers and rock wool, and these fibers can be used alone or in combination of two or more types.

The binder may be a thermosetting resin such as a phenolic resin and epoxy resin, a resin obtained by modifying these thermosetting resins with various elastomers such as cashew oil or silicon oil, and a resin obtained by dispersing the various elastomers and fluorine polymer on the thermosetting resin. These resins may be used alone or in combination of two or more types.

The friction modifier may be organic fillers such as cashew dusts, rubber dusts (pulverized rubber powder of tire tread rubber), and various unvulcanized rubber particles and various vulcanized rubber particles, inorganic fillers such as barium sulfate, calcium carbonate, calcium hydroxide, vermiculite, and mica, and lubricants such as graphite, molybdenum disulfide, tin sulfide, zinc sulfide, and iron sulfide. These friction modifiers may be used alone or in combination of two or more types.

### <1-3> Disc Brake Pad Manufacturing Method

In the disc brake pad of this invention, the friction material is affixed to the back plate surface-treated by the above-described surface treatment method.

The disc brake pad of the present invention is manufactured through a mixing step of mixing a friction material blended in predetermined amounts of the above-described fiber base material, the binder, and the friction modifier, by a mixer, a heat press forming step of performing the surface treatment through the above-described surface treatment method and filling the back plate coated with the adhesive as necessary and the obtained friction material mixture by a mixing step into a heat forming die to heat-press-form the same, a heat treatment step of heating the obtained formed product to complete the binder curing, and a grinding step to form the friction surface.

As necessary, prior to the heat press forming step, a granulation step of granulating the raw friction material mixture and a pre-forming step of forming a preformed product by filling the raw friction material mixture or granulated raw friction material mixture into a pre-forming die may be conducted, and after the heat press forming step, a coating step or a baked coating step, and/or a scorching step are conducted.

### [Embodiments]

According to the preferred embodiments, the present invention will be explained but the present invention is not limited to the following embodiments.

### <Embodiments 1-5 and Comparative Examples 1-3>

### <TABLE 1>

### EM = Embodiment

### CE = Comparative Example

### <1-1> Back Plate of the Embodiment 1

The cleaned back plate, made from SAPH440, is activated by placing it in a

| | | EM1 | EM 2 | EM 3 | EM 4 | EM 5 | CE 1 | CE 2 | CE 3 |
|---|---|---|---|---|---|---|---|---|---|
| Back plate material | | SAPH 440 | SAPH 440 | SAPH 440 | SAPH 440 | SAPH 440 | SAPH 440 | SAPH 440 | SAPH 440 |
| Activation treatment | Temp. (Degree Celsius) | 350 | 400 | 450 | 400 | 400 | 300 | 500 | - |
| | Time (min.) | 30 | 30 | 30 | 30 | 30 | 30 | 30 | - |
| Gas nitriding treatment | Temp. (Degree Celsius) | 570 | 570 | 570 | 570 | 570 | 570 | 570 | 570 |
| | Time (min.) | 30 | 30 | 30 | 30 | 30 | 30 | 30 | 30 |
| Cooling | | Cooling chamber | Cooling chamber | Cooling chamber | Nitriding chamber Ammonia gas | Cooling chamber Nitrogen gas | Cooling chamber | Cooling chamber | Cooling chamber |
| Adhesive strength | | Δ | Δ | Δ | ⊚ | ○ | × | × | × |

chamber maintaining the atmospheric temperature at 350 degree Celsius, pouring NF₃ gas into the chamber and holding the condition for 30 minutes.
Thereafter, the chamber temperature is increased to 570 degree Celsius, and ammonia gas is poured into the chamber and the condition is held for 30 minutes to nitride the back plate.
Finally, the back plate is transferred to a cooling chamber to be cooled down to room temperature in order to obtain the surface treated back plate.

### <Back Plate of the Embodiment 2>

The cleaned back plate made from SAPH440 is activated by placing it in a chamber maintaining an atmospheric temperature of 400 degree Celsius, pouring NF₃ gas into the chamber and holding the condition for 30 minutes.

Thereafter, the chamber temperature is increased to 570 degree Celsius, and the ammonia gas is poured into the chamber and the condition is held for 30 minutes to nitride the back plate.

Finally, the back plate is transferred to a cooling chamber to be cooled down to room temperature in order to obtain the surface treated back plate.

### <Back Plate of Embodiment 3>

The cleaned back plate made from SAPH440 is activated by placing it in a chamber maintaining an atmospheric temperature of 450 degree Celsius, pouring NF₃ gas into the chamber and holding the condition for 30 minutes.

Thereafter, the chamber temperature is increased to 570 degree Celsius, and the ammonia gas is poured into the chamber and the condition is held for 30 minutes to nitride the back plate.

Finally, the back plate is transferred to a cooling chamber to be cooled down to room temperature in order to obtain the surface treated back plate.

### <Back Plate of Embodiment 4>

The cleaned back plate made from SAPH440 is activated by placing it in a chamber maintaining an atmospheric temperature of 400 degree Celsius, introducing NF₃ gas into the chamber and holding the condition for 30 minutes.

Thereafter, the chamber temperature is increased to 570 degree Celsius, and ammonia gas is poured into the chamber and the condition is held for 30 minutes to nitride the back plate.
Finally, the back plate is cooled down in the same chamber while filling with the ammonia gas to be cooled down to room temperature to obtain the surface treated back plate.

### <Back Plate of Embodiment 5>

The cleaned back plate made from the SAPH440 is activated by placing it in a chamber maintaining an atmospheric temperature at 350 degree Celsius, pouring NF₃ gas into the chamber and holding the condition for 30 minutes.

Thereafter, the chamber temperature is increased to 570 degree Celsius, and ammonia gas is poured into the chamber and the condition is held for 30 minutes to nitride the back plate.
Finally, the back plate is transferred to a cooling chamber, and the diluent gas is poured on to the chamber to be cooled down to room temperature to obtain the surface treated back plate.

### <Back Plate of Comparative Example 1>

The cleaned back plate made from SAPH440 is activated by placing it in a chamber maintaining an atmospheric temperature of 300 degree Celsius, pouring NF₃ gas into the chamber and holding the condition for 30 minutes.

Thereafter, the chamber temperature is increased to 570 degree Celsius, and the ammonia gas is poured into the chamber and the condition is held for 30 minutes to nitride the back plate.
Finally, the back plate is transferred to a cooling chamber to be cooled down to room temperature to obtain the surface treated back plate.

### <Back Plate of Comparative Example 2>

The cleaned back plate made from SAPH440 is activated by placing it in a chamber maintaining an atmospheric temperature of 500 degree Celsius, pouring NF₃ gas into the chamber and holding the condition for 30 minutes.

Thereafter, the chamber temperature is increased to 570 degree Celsius, and the ammonia gas is poured into the chamber and the condition is held for 30 minutes to nitride the back plate.

Finally, the back plate is transferred to a cooling chamber to be cooled down to room temperature to obtain the surface treated back plate.

### <Back Plate of Comparative Example 3>

The cleaned back plate made from SAPH440 is activated by placing it in a chamber maintaining an atmospheric temperature of 570 degree Celsius, pouring ammonia gas into the chamber and holding the condition for 30 minutes to nitride the back plate.

Finally, the back plate is transferred to a cooling chamber to be cooled down to room temperature to obtain the surface treated back plate.

### [Manufacturing Method of Disc Brake Pad According to Embodiments 1-5 and Comparative Examples 1-3]

The frictional material compositions as shown in TABLE 2 are mixed for 5 minutes and the obtained friction material mixture is pressed in the preforming die under 10MPa for 1 minute.
This preformed product and the back plate with the adhesive coated thereon according to the Embodiments 1-5 and the Comparative Examples 1-3 are superposed and placed in the heat forming metal die to be heated at the forming temperature of 150 degree Celsius and are pressed under the forming pressure at 40MPa for 10 minutes.

Thereafter, the formed product is heated at 200 degree Celsius for 5 hours for post-curing and the cured product is then ground to make the disc brake pad according to the Embodiments 1-5 and the Comparative Examples 1-3.

**<TABLE 2>**

| | | |
|---|---|---|
| Fiber base material | Aramid fiber | 7 |
| | Copper fiber | 1 |
| | Potassium titanate fiber | 12 |
| Binder | Phenolic resin | 15 |
| Friction modifier | Graphite | 5 |
| | Mica | 10 |
| | Zirconium silicate | 10 |
| | Barium sulfate | 15 |
| | Calcium hydroxide | 5 |
| | Cashew dust | 15 |
| | Rubber dust | 5 |
| Total | | 100 |

### <Evaluation of Adhesive Strength>

The adhesive strength of the friction material and the back plate was evaluated by measuring the survival rate of the remaining friction material after a shearing test in accordance with JIS D4422 (Automotive parts -- Drum brake shoe assemblies and disc brake pad -- Shear test procedure). The shearing test was operated after holding the brake pad under the atmosphere of 300 degree Celsius for 36 hours.

The evaluation standard is as in the TABLE 3.

The evaluation results are shown in TABLE 1.

**<TABLE 3>**

| | Friction Material Survival Rate |
|---|---|
| ⊚ | 90% or more |
| ○ | 70% or more but less than 90% |
| Δ | 50% or more but less than 50% |
| × | Less than 50% |

### <Observation of Cross Section and Surface of Back Plate>

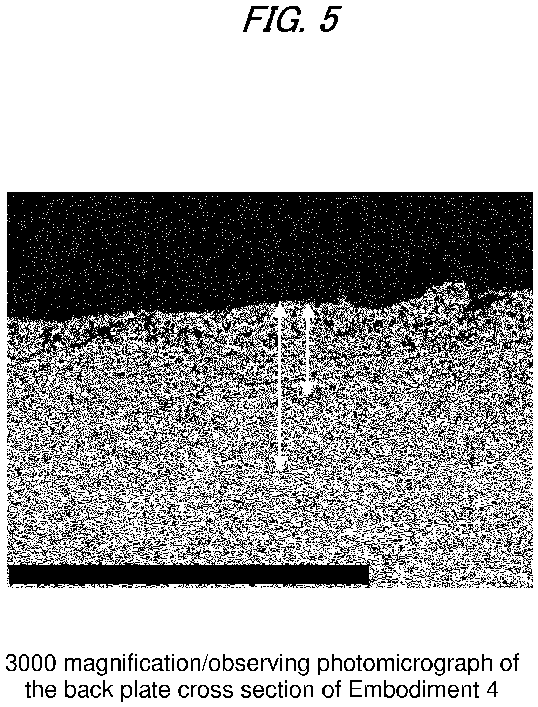

An electron microscope is used to observe the cross section of the back plate in the Embodiment 4 and the Comparative Example 3 with a 3000 magnification and the surface of the back plate with magnifications of 1000 and 10000.
Each photomicrograph is shown in Figures 5-10.

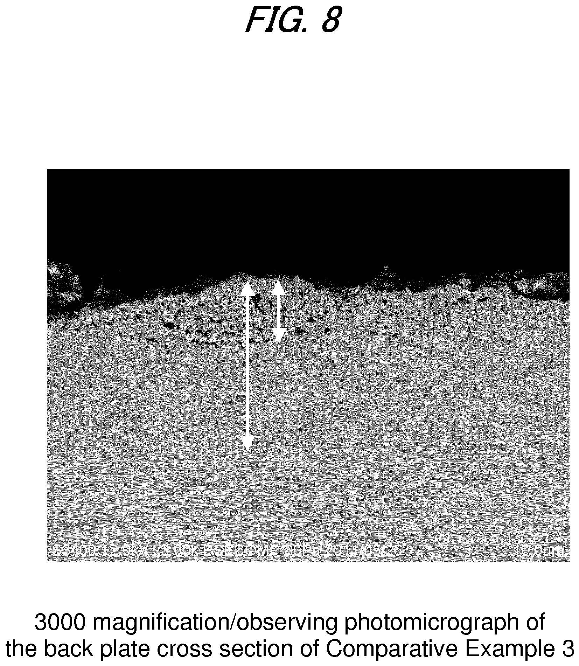

Comparing Figure 5 showing the observing photomicrograph of the cross section of the back plate according to the Embodiment 4 and Figure 8 showing the observing photomicrograph of the cross section of the back plate according to the Comparative Example 3, it would be understood that a porous layer of Embodiment 4 is formed deeper than the same of Comparative Example 3.

The depth of the compound layer formed on the back plate of the Embodiment 4 is about 13 *µ* m, while the thickness of the porous layer is about 8 *µ* m, and the thickness of the porous layer is about 61% of the depth of the compound layer.

The thickness of the compound layer formed on the back plate of the Comparative Example 3 is about 13 *µ* m, while the thickness of the porous layer is about 5 *µ* m, and the thickness of the porous layer is about 38% of the depth of the compound layer.

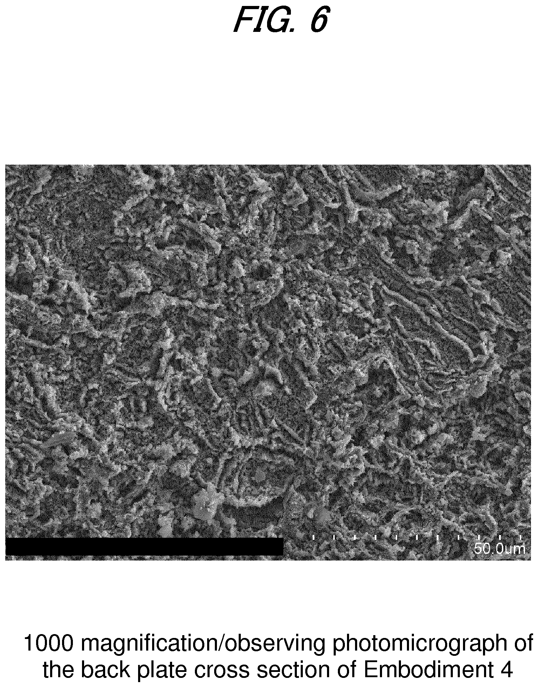

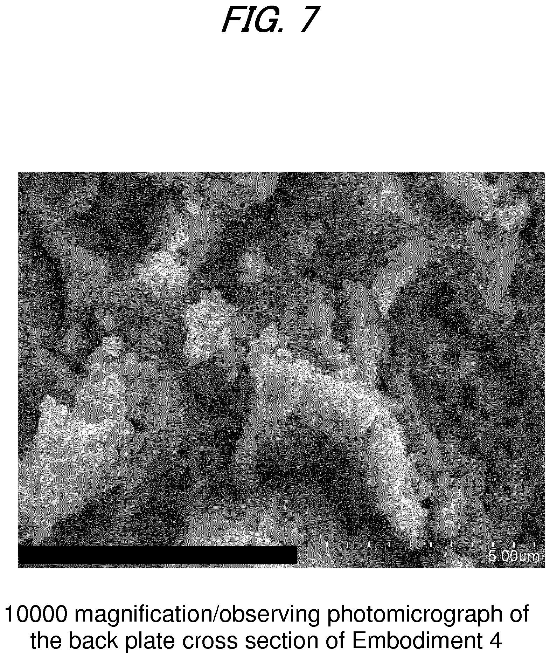

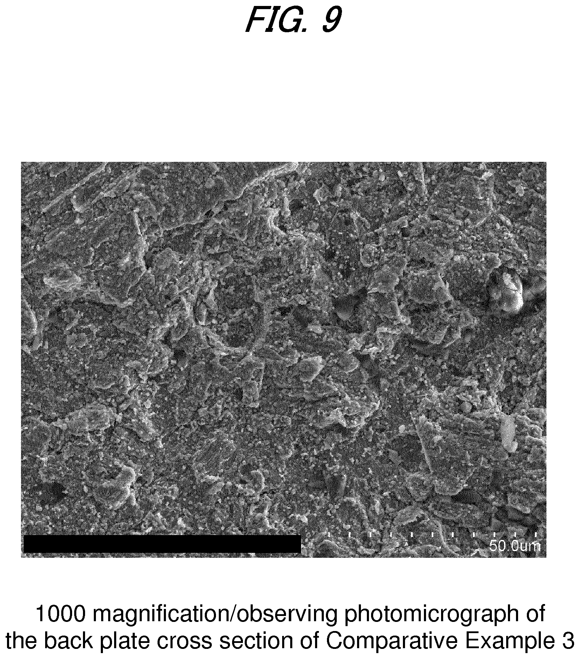

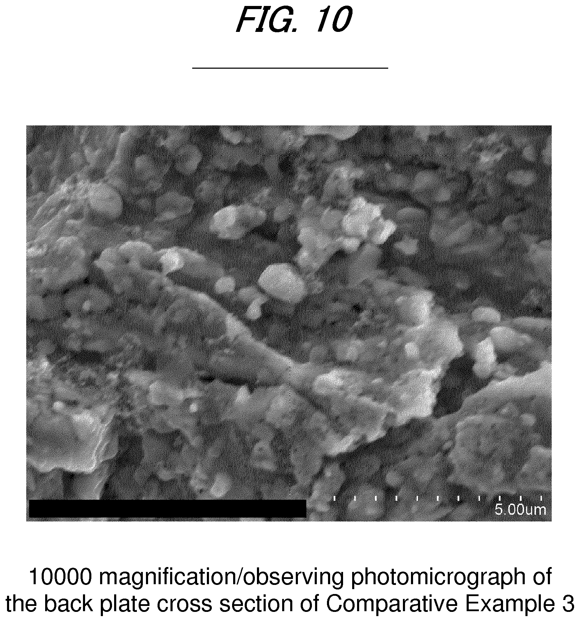

Comparing Figures 6, 7 showing the observing photomicrograph of the surface of the back plate according to the Embodiment 4 and Figures 9, 10 showing the observing photomicrograph of the same of the back plate according to the Comparative Example 3, is would be understood that an irregular patterns of the Embodiment 4 is minute and more complex than the same of the Comparative Example 3.

### [Industrial Applicability]

The present invention can improve the adhesive strength between the friction material and the back plate for the steel back plate used in the disc brake pad such as for an automotive car.

This invention also provides the disc brake pad with sufficient adhesive strength, which further contributes to the automotive industry.

### [Explanation of Reference Number]

1. Disc Brake Pad
2. Back Plate
4. Friction Material

## Claims

1. A steel back plate (2) for a disc brake pad (1), comprising:
a compound layer, on which a friction material (3) is adhered,
**characterized in that**:
said compound layer is obtained through an activation treatment in a fluorine-based gas atmosphere at 350 - 450 degrees Celsius and a gas nitriding method or a gas soft nitriding method,
said compound layer includes a porous layer formed at a front surface side of the compound layer,
said compound layer has a depth of 5µm to 20µm, and
said porous layer has a thickness of 40% or more of the depth of the compound layer at said front surface side of the compound layer.

2. A disc brake pad having a back plate (2) according to claim 1, wherein the friction material (3) is adhered on the back plate.

## Patentansprüche

1. Grundplatte aus Stahl (2) für einen Scheibenbremsklotz (1), umfassend:
eine Verbundschicht, auf der ein Reibungsmaterial (3) angehaftet ist,
**dadurch gekennzeichnet, dass**:
die Verbundschicht durch eine Aktivierungsbehandlung in einer fluorbasierten Gasatmosphäre bei 350-450 Grad Celsius und ein Gasnitridierungsverfahren oder ein Gasweichnitridierungsverfahren erhalten wird,
wobei die Verbundschicht eine poröse Schicht umfasst, die auf einer Vorderflächenseite der Verbundschicht ausgebildet ist,
wobei die Verbundschicht eine Tiefe von 5 *µ*m bis 20 *µ*m hat und
die poröse Schicht eine Dicke von mindestens 40 % der Tiefe der Verbundschicht auf der Vorderflächenseite der Verbundschicht hat.

2. Scheibenbremsklotz mit einer Grundplatte (2) nach Anspruch 1, wobei das Reibungsmaterial (3) an der Grundplatte angehaftet ist.

## Revendications

1. Plaque support en acier (2) pour plaquette de frein à disque (1), comprenant :
une couche de combinaison sur laquelle est collé un matériau de frottement (3),
**caractérisée en ce que** :
ladite couche de combinaison est obtenue au moyen d'un traitement d'activation sous atmosphère de gaz à base de fluor à une température de 350 à 450 degrés Celsius, et d'un procédé de nitruration gazeuse ou d'un procédé de nitruration douce en phase gazeuse,
ladite couche de combinaison comporte une couche poreuse formée d'un côté face avant de la couche de combinaison, ladite couche de combinaison a une profondeur de 5 *µ*m à 20 *µ*m, et
ladite couche poreuse a une épaisseur au moins égale à 40 % de la profondeur de la couche de combinaison dudit côté face avant de la couche de combinaison.

2. Plaquette de frein à disque comportant une plaque support (2) selon la revendication 1, dans laquelle le matériau de frottement (3) est collé sur la plaque support.
